# EUROPEAN PATENT SPECIFICATION

(11) **EP 0 260 960 B1**
(45) Date of publication and mention of the grant of the patent: **30.11.1994**
(21) Application number: 87308209.3
(22) Date of filing: 16.09.1987
(51) Int. Cl.: B25J 15/10, B25J 11/00, B25J 15/00

(54) **Industrial robot hand**
Greifer eines Industrieroboters
Grappin d'un robot industriel

(30) Priority: 16.09.1986 JP 140589/86
(43) Date of publication of application: 23.03.1988
(73) Proprietor: KABUSHIKI KAISHA YAKULT HONSHA, Minato-ku Tokyo 105 (JP)
(72) Inventor: No, Shinichiro, Hoya-shi Tokyo (JP); Kimura, Minao, Tokorozawa-shi Saitama-ken (JP)
(74) Representative: Leale, Robin George

(56) References cited:
- DE-A- 3 133 201
- US-A- 4 592 691
- US-A- 4 597 714
- US-A- 4 645 407
- IBM TECHNICAL DISCLOSURE BULLETIN, vol. 28, no. 7, December 1985, New York. "Robot Gripper for Polystyrene Tray Removal".

## Description

This invention relates to an industrial robot hand which is connectible to an industrial robot, for example to the wrist portion of the arm of a robot, to handle articles.

As article handling apparatus, various kinds of apparatus such as robots, manipulators, fork lift trucks, cranes, and the like have been put into practical use. A hand to grasp an article is frequently attached to such apparatus. Such hands are mainly classified into hands of the finger type, having claw-like engaging members to hold an article, and hands of the fingerless type having no such engaging members.

Finger type hands may be classified into hands to hang down, hands to pinch, hands to sandwich, hands to grasp, and the like. In the particular case of the sandwiching type hand, the engaging members are inserted from both sides of an article under the bottom portion thereof, or into lateral holes formed in the article, thereby lifting or moving the article. Therefore, it is necessary to accurately locate the hand in a position just above the article. This is because, if the hand is not accurately positioned, the engaging members cannot be so located on both sides of the article and thus the article cannot be properly grasped. In an industrial robot, it is possible to accurately position the hand. However, there is a possibility that an article which is to be grasped may have been displaced. Then, it is difficult to accurately set the articles at a constant position, and an advanced technique is needed to position the hand accurately. In an operation to pile up articles, when an industrial robot piles up articles at the same coordinate position, it can be uncertain whether or not the articles have been piled up at the same position as the coordinate position designated by the robot hand. Actually, in many cases, the positions of the articles are slightly displaced. In particular, when articles have interengaging portions, they cannot be piled up properly if upper and lower articles are relatively displaced.

Furthermore, when articles are packaged with a soft packaging material, or when the dimensional accuracy of boxes in which articles are enclosed is low, or when a pallet on which articles are mounted is deformed, or the like, the piled articles may not be aligned in the vertical direction. Then, the engaging members of the hand cannot be lowered because they will touch an article which is displaced relative to the other articles.

As a countermeasure for such problems, it is possible to consider a method whereby a video input pattern is recognized or a method whereby the article position is corrected and controlled by a sensor output. However, these methods have the drawback of an increase in cost.

It is therefore an object of the present invention to provide an industrial robot hand in which even if piled articles are displaced due to various causes, the engaging members of the hand can still be properly lowered.

Thus according to the present invention there is provided an industrial robot hand comprising:
a fixed frame connectible to a wrist portion of an arm of an industrial robot; and
a movable frame, of rectangular shape in plan, which is supported by said fixed frame so as to be movable horizontally;
wherein:
guide rods are vertically attached to each of the four sides of said movable frame, a guide which extends downwardly in a tapered form is fixed to the end portion of each of said guide rods, sandwiching plates are provided on two opposite sides of the said movable frame, each of the sandwiching plates being swingably mounted on a horizontal axis at substantially the central region of the sandwiching plate, engaging members for holding an article project inwardly from the lower inner surfaces of the sandwiching plates, rollers and roller guides, are provided, one on each respectively, of the fixed frame and the movable frame, for restricting the range of movement within which the frame is movable in two dimensions, means for selectively locking the movable frame in a specific location within said range and a driving mechanism for moving the said sandwiching plates into engagement with an article is provided on the movable frame.

In use of such a device, the said fixed frame is first connected to a material handling machine, e.g., the arm of a robot. By operating the robot, the hand which is to grasp an article is moved to a position above the article and is then lowered until the engaging members of the sandwiching plates are located at the level of the article. At this time, since the said driving mechanism is not operated, the sandwiching plates do not grip the article. Further, the locking mechanism consisting of the rollers and roller guides is also kept inoperative. Therefore the movable frame is movable in the horizontal direction.

When the grasping hand is lowered in such a manner, if the piled up articles are properly aligned, no problems will occur. However, even if the positions of the articles are slightly displaced, the fact that the said guides extend downwardly in tapered form, so that a bottom portion of the guide is smaller than a top portion of the guide, allows for such displacement. Thus, so long as the articles are only displaced within a limited range, the hand can be lowered. When the tapered portions touch an article, the movable frame is moved by the reaction in the direction to eliminate the reaction, so that the movable frame becomes vertically aligned with the articles.

When the engaging members of the grasping hand have reached the bottom region of the article, or holes in the article for inserting the engaging members, the driving mechanism is operated to thereby pivot the said sandwiching plates. As a result, the engaging members projecting from the sandwiching plates come into engagement with the article, that is, the article is grasped by the hand. When the article has been so grasped, the arm is operated to lift up the article. Even if the article so lifted comes into contact with a neighbouring article or the like during this lifting operation, the movable frame can again move to compensate. Therefore the dropping of articles, or the breakdown of the arm of the material handling machine or the like due to a shock, is prevented. After any danger of such contact has passed, the locking mechanism may be made operative to lock the movable frame to the fixed frame, and the article may then be handled in accordance with a predetermined procedure. In a case where articles having engaging portions are to be piled up, the grasping hand is moved to a position above the piled articles, with an article already grasped, and is lowered while correcting its position so as to accurately place an article on the pile. After completion of such an article handling step, the article is released from the grasping hand by a reverse procedure, and the next handling operation is executed in a manner similar to the above.

As described above, even if the positions of piled articles are displaced in the horizontal direction, or even if the grasping hand is not accurately located at a position above the articles, so long as the articles are located within the range of the tapered portions of the guides, the articles can be grasped by the hand. Therefore, a high accuracy of location in the horizontal direction is not required for articles which are piled up by means of engaging portions thereof. The robot hand can cope with such articles. Moreover, the hand has a simple structure in that the movable frame is movably attached to the fixed frame and tapered guides are merely attached to the movable frame. Therefore, the apparatus can be compact in size, light in weight, and inexpensive. Also maintenance can be easily performed. The hand has wide practical utility. On the other hand, when the locking mechanism is made operative the hand can be also used as an ordinary grasping hand. Further, the sandwiching plates can swing freely about their horizontal axes, and the driving mechanism for the sandwiching plates is such that the said plates are spaced apart until they grasp an article and, when they do so, they are moved by the driving mechanism in the direction to sandwich the article and the article is then reliably held by the engaging members.

Thus a grasped article can be accurately positioned over articles which have already been piled up, and can be accurately aligned and placed thereon. Therefore, in particular, articles having interengaging portions can be reliably piled up.

In embodying the invention it is desirable to reduce the resistance to movement of the movable frame by interposing ball bearings between the fixed frame and the movable frame. Such resistance can be also reduced by providing a thin oil layer or a thin air layer between the fixed frame and the movable frame. Since there is a possibility that the guide rods could collide with an article during handling, it is desirable to provide an escape means such that, for example, if the guide rods collide with an article, they move rearwardly, and a microswitch or the like is provided at the rearward position, thereby energising an alarm or stopping the movement of the arm. It is also preferable that the locking mechanism and driving mechanism are constituted by piston cylinder units. It is also preferred to provide a mechanism to limit the range of movement of the movable frame when the locking mechanism comprising the rollers and roller guides is released. It is preferable that the range of movement of the movable frame is smaller than the range of movement of the tapered portions of the guides. It is furthermore desirable to provide two or more guide rods at each side of the movable frame. If the spacing between the guides is set to be slightly larger than the corresponding width of the articles to be handled and is also set to be smaller than the inner width of the frame, the articles will not interfere with the frame. Such a structure is preferable since the cost is relatively low and maintenance can be easily performed.

Some embodiments of the invention will now be described by way of example and with reference to the accompanying drawings, in which:-
Figs. 1A,1B, 2 and 3 are diagrams showing a first embodiment of the invention, in which:
Figs. 1A and 1B are cross-sectional views showing the relation between a fixed frame and a movable frame, respectively;
Fig. 2 is a perspective view showing the whole structure; and
Fig. 3 is a perspective view showing a locking mechanism;
Figs. 4 to 7 are diagrams showing a second embodiment of the invention, in which:

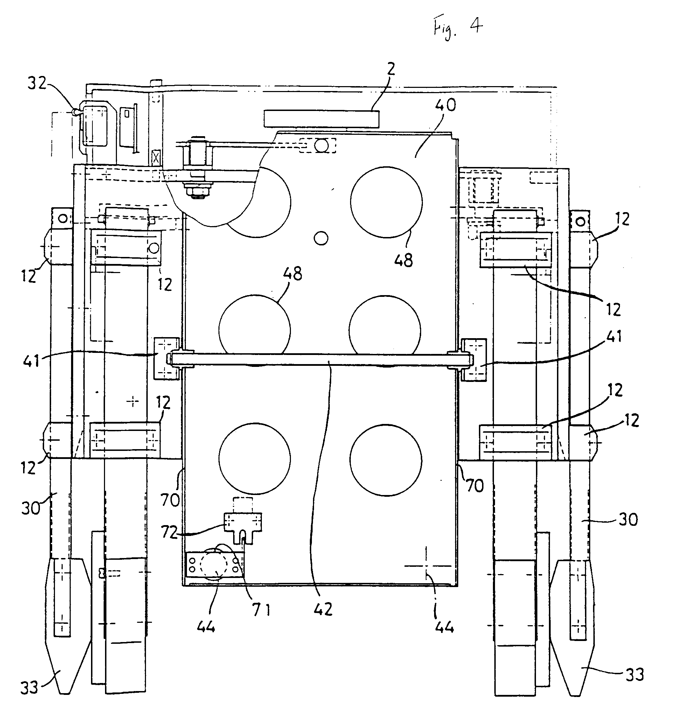

Fig. 4 is a front view;

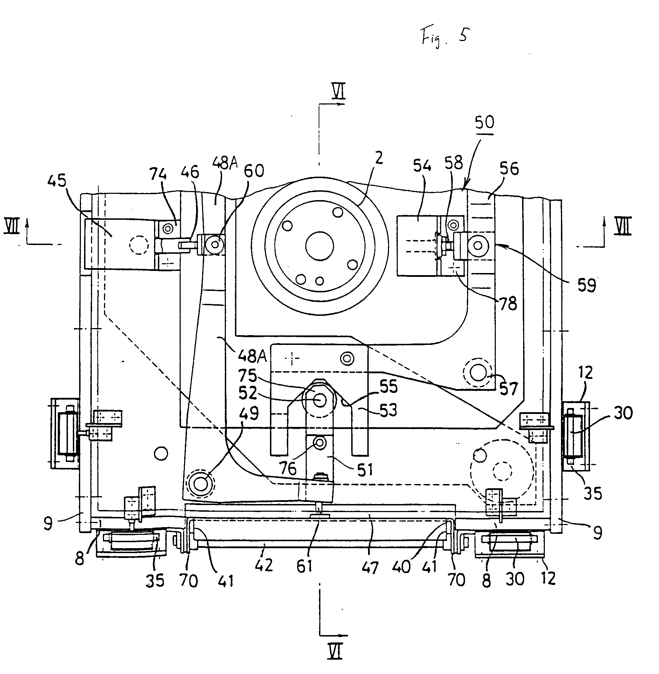

Fig. 5 is a plan view with a part omitted;

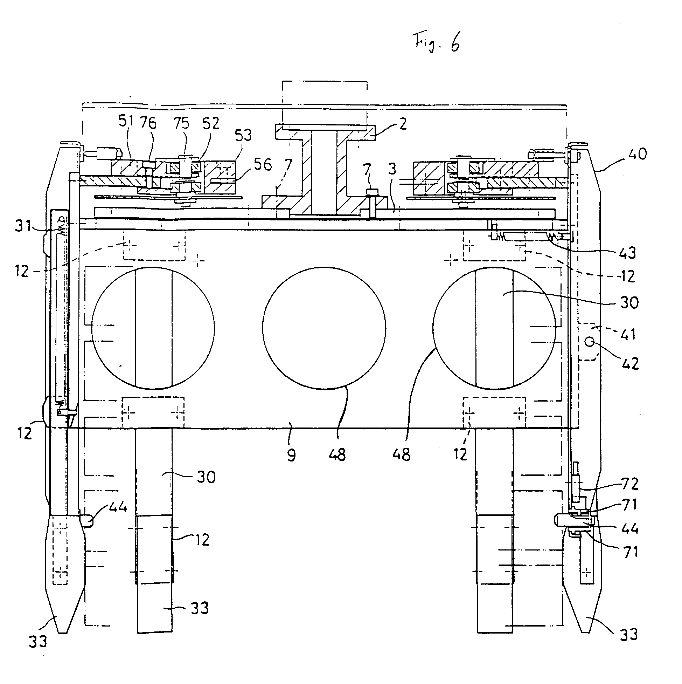

Fig. 6 is a cross-sectional view taken along the line VI-VI in Fig. 5; and

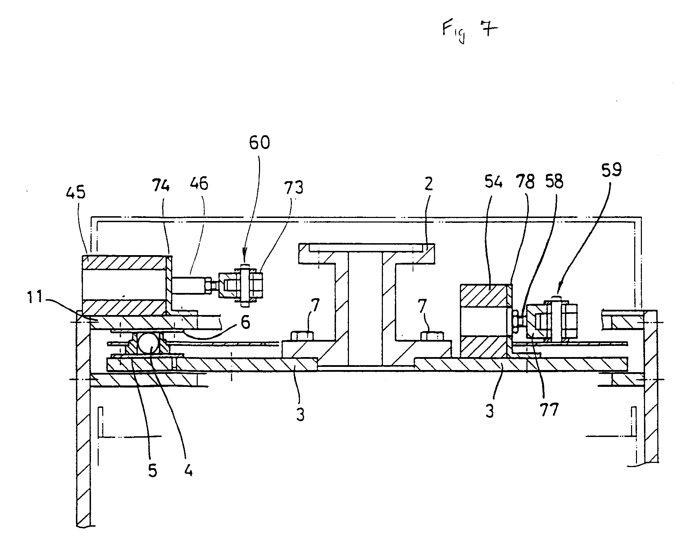

Fig. 7 is a cross-sectional view taken along the line VII-VII in Fig. 5.

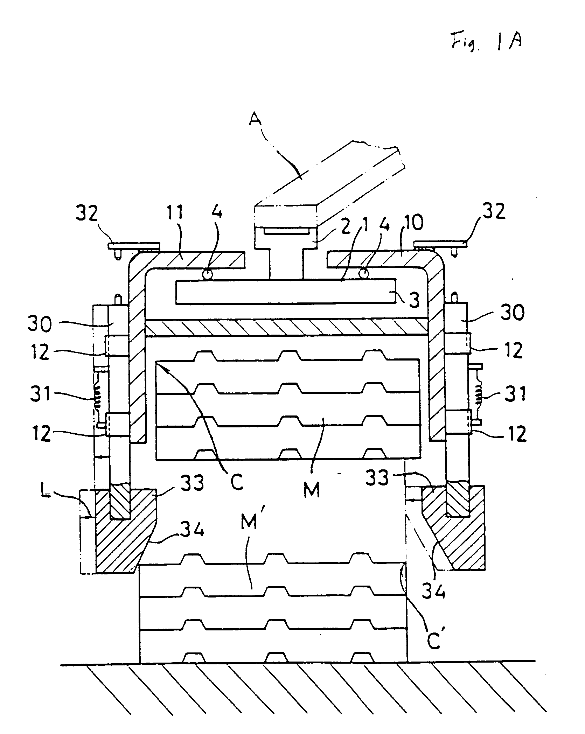

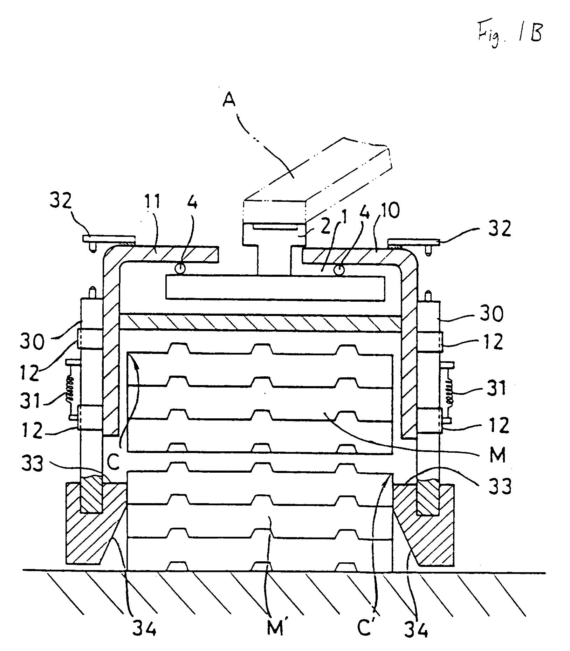

A first embodiment of the invention will now be described with reference to Figs. 1 to 3.

In Figs. 1A and 1B, a material grasping hand according to the invention comprises a fixed frame 1 and a movable frame 10. The fixed frame 1 is fixed to an arm A of an article handling machine through a flange 2. Balls 4 are interposed between a plate 3 of the fixed frame 1 and a movable plate 11 which is part of the movable frame 10. The movable frame is freely movable on the fixed frame in the horizontal direction within a limited region, as will be explained hereinafter.

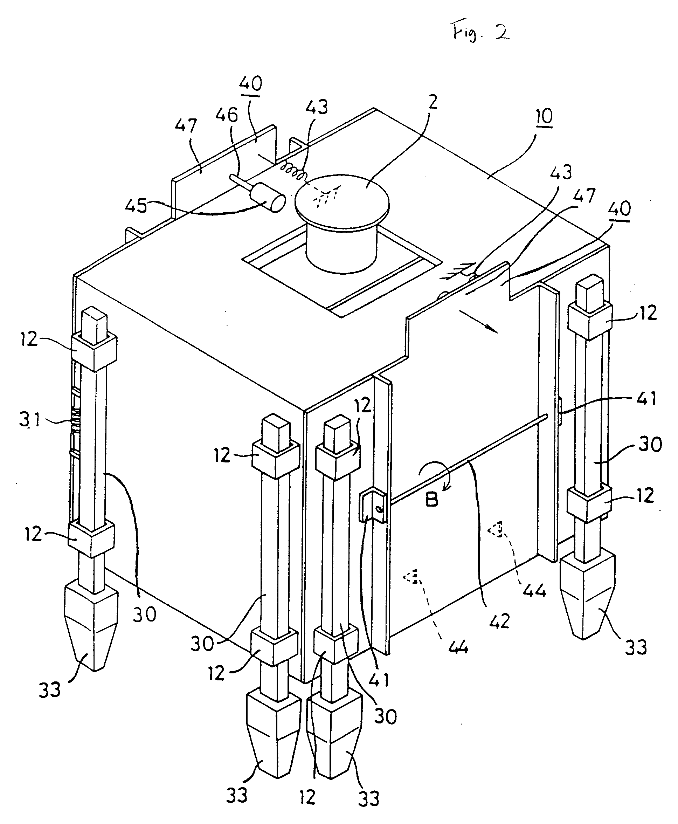

As also shown in Fig. 2, the movable frame 10 is of rectangular shape in plan. Two guide rods 30 are vertically slidably attached to each of the four sides of the movable frame 10. Namely, as shown in Figs. 1A and 1B, each guide rod 30 is vertically slidable in two upper and lower metal fittings 12, and is urged downwardly by a coil spring 31. If the guide rod unexpectedly comes into contact with an article or the like, the rod moves upwardly and touches a limit switch 32 at a predetermined limit position (i.e. a position at which the article is not damaged), so that an alarm is generated or the movement of the arm is stopped.

A guide 33 is fixed to the tip, i.e. the lower end, of each guide rod 30. As shown in Figs. 1A and 1B, the bottom portion of the guide 33 is downwardly tapered. Thus, the guide 33 has a tapered portion 34 extending towards the articles to be handled. The tapered portion 34 is formed so that the width adapted to guide the articles (i.e., the spacing between the opposite guides 33) widens downwardly. therefore, as shown in the drawings, when the tapered portions 34 of the guides 33 come into contact with corner portions C of an article M, the movable frame 10 is moved by the reaction in the direction indicated by arrow L.

As shown in Fig. 2, sandwiching plates 40 are provided on two opposite sides of the movable frame 10. Each sandwiching plate 40 is pivotally swingably supported by L-shaped metal brackets 41 on a horizontal axis 42, substantially at its central region. Each plate 40 is urged by a coil spring 43 such that the lower end portions ar urged apart. Two claw-like engaging members in the form of claws 44 project from the inner surface of the lower portion of each plate 40. The claws 44 are used to grip an article. For this purpose, the sandwiching plates 40 need to be rotated in the direction indicated by arrow B in Fig. 2, against the coil springs 43. To so rotate the plates 40, driving mechanisms in the form of piston cylinder units 45 are mounted on the movable plate 11 of the movable frame 10. When a piston rod 46 presses a projecting portion 47 of the sandwiching plate 40, the plate 40 is rotated and the claws come into engagement with an article.

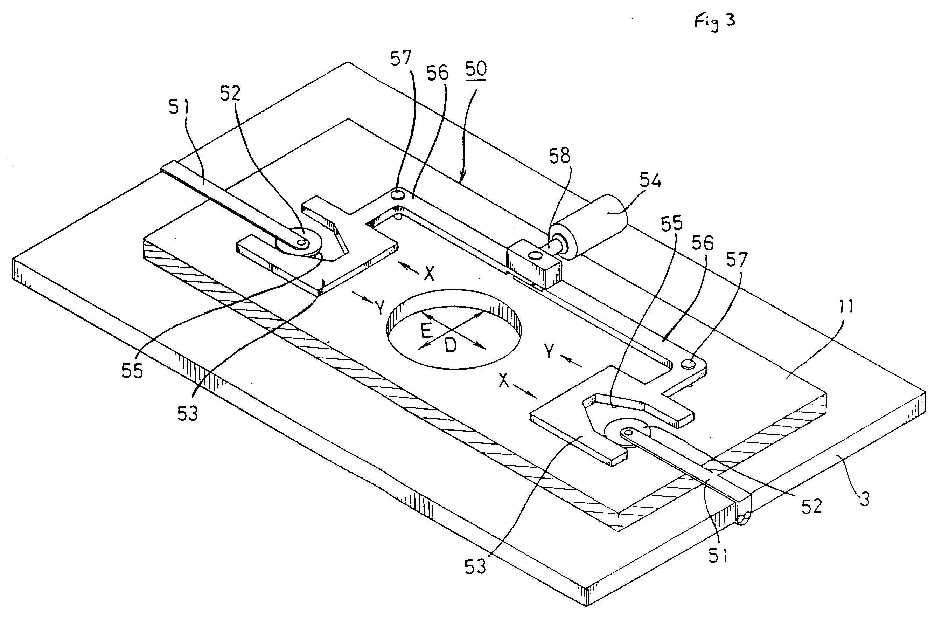

As shown in Fig. 3, a locking mechanism 50 for the fixed frame 1 and movable frame 10 comprises: rollers 52 attached to the plate 3 of the fixed frame 1 through arms 51; roller guides 53 mounted on the movable plate 11 of the movable frame 10; and a piston cylinder unit 54. The rollers 52 and roller guides 53 also function as a limiting mechanism of the relative movement of the fixed frame 1 and movable frame 10.

Each arm 51 is substantially L-shaped. One end of the arm 51 is fixed to the plate 3 and the roller 52 is rotatably axially supported at the other end. The portion of the roller guide 53 which faces the arm 51 is notched and the inner part of the notched portion is narrowed so as to form a trapezoidal portion 55. Therefore, when the roller guides 53 move in the X direction, i.e. away from each other, the rollers 52 are fully inserted into the trapezoidal portions 55, so that the rollers 52 and the roller guides 53 cannot move relatively to one another. Thus the movable plate 11 of the movable frame 10 becomes locked to the fixed frame 1. Since the notched trapezoidal portions 55 are formed in the roller guides 53, when the rollers come into engagement with the notches, the movable plate 11 is locked in both D and E directions, indicated in Fig. 3. When the roller guides 53 are moved in the Y direction, i.e. towards each other, the movable plate 11 is unlocked.

To move the roller guides 53 in the X and Y directions, L-shaped arms 56 are coupled with the roller guides 53. The arms 56 are swingably mounted at their corners on pins 57. The end portions of the arms 56 are driven by a piston rod 58 of the piston cylinder unit 54.

The robot hand of this embodiment operates in the following manner. As shown in Fig. 1A, the grasping hand is intended to grasp an article M and to place it on an article M'. The roller guides 53 are moved in the Y direction, whereby the locking mechanism 50 is unlocked, and the hand is lowered. If a corner portion C' of article M' comes into contact with the tapered portion 34 of a guide 33, the movable frame 10 is caused to move in the L direction by the reaction, and the hand can then be further lowered. Thus the movable frame 10 becomes positioned as shown in Fig. 1B and the article M can be accurately placed on the article M'.

After the grasping hand has been lowered, the two piston cylinder units 45 (only one of them is shown in Fig. 2) are operated to engage the projecting portions 47. Thus the upper portions of the sandwiching plates 40 are pivoted outwardly and the lower portions thereof are thereby pivoted inwardly, so that the claws 44 attached to the plates 40 grip the article. In this manner a predetermined article handling operation can be performed. The locking mechanism 50 may be made operative only after any possibility that an article will come into contact with, e.g., another neighbouring article has been eliminated. Alternatively, the hand may be locked immediately after the article has been held. After completion of the operation of moving or piling the article, the piston rods 46 of the piston cylinder units 45 are moved back to thereby disengage the claws from the article. In a manner similar to the above, further article handling operations may then be performed.

A second embodiment of the invention will now be described with reference to Figs. 4 to 7. In these figures the same or similar parts and components as those shown in Figs. 1 to 3 are designated by the same reference numerals and their descriptions are omitted.

As shown in Figs. 6 and 7, the plate 3 of the fixed frame 1 is fixed by bolts 7 to the flange 2 which is coupled with the arm of the material handling machine. The movable plate 11 is movably supported on the plate 3 through balls 4 interposed at a plurality of positions on the plate 3. For smooth rotation of the balls, disks 5 and 6 are arranged on the lower surface of the movable plate 11 and on the upper surface of the plate 3, to sandwich the balls therebetween.

The movable frame 10 is of rectangular shape in plan. The four sides of the movable frame are surrounded by two opposite sandwiching plates 40 and two opposite side plates 9. A plurality of through holes 48 are formed in the plates, thereby enabling an article which is grasped to be seen. As shown in Figs. 4 and 5, each sandwiching plate 40 has two flange portions which are axially supported on a horizontal axle 42. Claws 44 formed on the inner surface of the plate 40 can freely move forward and backward and are normally positioned by coil springs 71. The motion of the claws 44 is monitored by a limit switch 72.

In the embodiment of Figs. 4 to 7 the driving mechanism is constituted by a single piston cylinder unit 45. Thus, as shown in Fig. 5, by driving two pivotally mounted L-shaped arms 48A, the projecting portions 47 of the sandwiching plates 40 may be pressed outwardly. To achieve this, the piston rod 46 of the piston cylinder unit 45 is coupled with a knuckle 73 (Fig. 7). The inner end portions of the two L-shaped arms 48A are connected to the knuckle 73 by a pin 60. The piston cylinder 45 is fixed to the movable plate 11 by a bracket 74. Similarly, the L-shaped arms 48A are also pivotally attached to the movable frame 10 by pins 49. Therefore, when the outer end portions of the L-shaped arms are pressed outwardly by operating the piston cylinder unit 45, projections 61 in the outer end portions engage the projecting portions 47 of the sandwiching plates 40. The upper portion of each plate 40 is thus pivoted outwardly and the lower portion is thereby pivoted inwardly, so that the claws grip the article.

The locking mechanism 50 has substantially the same structure as that shown in Fig. 3, except for the structure of the portion in which the piston rod 58 of the piston cylinder unit 54 engages the L-shaped arms 56. The structures of the piston rod 58 of the unit 54 and of the end portions of the L-shaped arms 56 are substantially the same as in the driving mechanism 45. As shown in Figs. 5 to 7, the piston rod 58 is coupled with a knuckle 77. The end portions of the arms 56 are coupled with the knuckle 77 by a pin 59. The piston cylinder unit 54 is fixed to the plate 3 by a bracket 78. The arms 51 which support the roller 52 by a pin 75 are fixed to the movable frame 10.

Since the operation of this embodiment is substantially the same as that of the embodiment of Figs. 1 to 3, its description is omitted.

As described above, in the illustrated embodiments of the invention, the movable frame is horizontally movably attached to the fixed frame which is connected to the arm of an industrial robot. The tapered guides are attached to the movable frame. Therefore, even if the positions of articles are displaced in the horizontal direction, due to inclination of the piled articles or the like, or even if the grasping hand is not accurately disposed at the correct position just above the articles, an article handling operation can still be performed. Further, since the tapered guides are merely attached to the movable frame, the structure is simple. Therefore, the robot hand is compact in size, light in weight, and inexpensive. Maintenance can be easily performed. There is also an advantage that by making the locking mechanism operative, the robot hand can be used in a manner similar to a conventional hand.

The present invention is not of course limited to the foregoing embodiments, but many modifications and variations are possible within the scope of the appended claims. For example, although the engaging members are shown as claws 44 in the drawings, it should be understood that they could have other shapes.

## Claims

1. An industrial robot hand comprising:
a fixed frame (1) connectible to a wrist portion of an arm (A) of an industrial robot; and
a movable frame (10), of rectangular shape in plan, which is supported by said fixed frame so as to be freely movable horizontally; characterised in that
guide rods (30) are vertically attached to each of the four sides of said movable frame, a guide (33) which extends downwardly in a tapered form (34) is fixed to the end portion of each of said guide rods, sandwiching plates (40) are provided on two opposite sides of the said movable frame, each of the sandwiching plates being swingably mounted on a horizontal axis (42) at substantially the central region of the sandwiching plate, engaging members (44) for holding an article project inwardly from the lower inner surfaces of the sandwiching plates, rollers (52) and roller guides (53) are provided, one on each respectively of the fixed frame and the movable frame, for restricting the range of movement within which the frame is movable in two dimensions, means for selectively locking the movable frame in a specific location within said range and a driving mechanism for moving the said sandwiching plates into engagement with an article is provided on the movable frame.

2. An industrial hand according to claim 1, wherein the said roller guides (53) are integrally connected to the ends of L-shaped arms (56) respectively, the other ends of said arms are connected to a piston rod (58) of a piston cylinder unit (54), each of said L-shaped arms is pivotally attached to a movable plate (11) of said fixed frame (1) via a pin (57), and a trapezoidal notch portion (55) is formed in each said roller guide (53), all so arranged that when the said piston cylinder unit is made operative the piston rod projects and the L-shaped arms are rotated around the said pins and the roller guides are moved outwardly so that the said trapezoidal notch portions come into engagement with the rollers and restrict the movement of the movable frame, and when the piston cylinder unit is made inoperative the roller guides disengage from the rollers so as to free the movable frame for movement.

3. An industrial robot hand according to claim 1 or 2, wherein the said driving mechanism comprises piston cylinder units (45) whose piston rods (46), when projected outwardly, engage projecting portions (47) of the said sandwiching plates (40), so that the upper portions of the plates are pivoted outwardly and the lower portions thereof are thereby pivoted inwardly around the said horizontal axes (42), whereby the said engaging members (44) come into engagement with an article and hold it.

## Patentansprüche

1. Greifer eines Industrieroboters, umfassend:
einen festen Rahmen (1), der mit einem Handgelenkabschnitt eines Arms (A) eines Industrieroboters verbindbar ist; und
einen beweglichen Rahmen (10) in Draufsicht rechteckiger Form, der von dem festen Rahmen horizontal frei beweglich gehalten ist; **dadurch gekennzeichnet**, daß
Führungsstangen (30) an jeder der vier Seiten des beweglichen Rahmens vertikal angebracht sind, eine Führung (33), die sich in einer verjüngten Form (34) nach unten erstreckt, an dem Endabschnitt jeder der Führungsstangen befestigt ist, an gegenüberliegenden Seiten des beweglichen Rahmens Sandwichplatten (40) vorgesehen sind, wobei jede der Sandwichplatten an einer horizontalen Achse (42) an im wesentlichen dem Mittelbereich der Sandwichplatten schwenkbar angebracht ist, Eingriffsteile (44) zum Halten eines Gegenstands von den unteren Innenflächen der Sandwichplatten einwärts vorstehen, Rollen (52) und Rollenführungen (53) vorgesehen sind, jeweils eine des festen Rahmens bzw. des beweglichen Rahmens, um den Bewegungsbereich, in dem der Rahmen in zwei Dimensionen beweglich ist, zu begrenzen, Mittel zum selektiven Sperren des beweglichen Rahmens an einer bestimmten Stelle in dem Bereich und ein Antriebsmechanismus zum Bewegen der Sandwichplatten in Eingriff mit einem Gegenstand an dem beweglichen Rahmen vorgesehen ist.

2. Industriegreifer nach Anspruch 1, in dem die Rollenführungen (53) jeweils integral mit den Enden L-förmiger Arme (56) verbunden sind, wobei die anderen Enden der Arme mit einer Kolbenstange (58) einer Kolben-Zylinder-Einheit (54) verbunden sind, jeder der L-förmigen Arme an einer beweglichen Platte (11) des festen Rahmens (1) via einen Stift (57) schwenkbar angebracht ist und ein trapezoidförmiger Kerbenabschnitt (55) in jeder Rollenführung (53) gebildet ist, die alle so angeordnet sind, daß bei Betätigung der Kolben-Zylinder-Einheit die Kolbenstange ausfährt und die L-förmigen Arme um die Stifte herum gedreht werden und die Rollenführungen nach außen bewegt werden, so daß die trapezoidförmigen Kerbenabschnitte mit den Rollen in Eingriff gelangen und die Bewegung des beweglichen Rahmens begrenzen, und bei Außerbetriebnahme der Kolben-Zylinder-Einheit die Rollenführungen sich von den Rollen trennen, um den beweglichen Rahmen zur Bewegung freizugeben.

3. Industrierobotergreifer nach Anspruch 1 oder 2, in dem der Antriebsmechanismus Kolben-Zylinder-Einheiten (45) umfaßt, deren Kolbenstangen (46), wenn sie ausgefahren sind, vorstehende Abschnitte (47) der Sandwichplatten (40) ergreifen, so daß die oberen Abschnitte der Platten nach außen verschwenkt und deren untere Abschnitte hierdurch um die Horizontalachsen (42) herum nach innen verschwenkt werden, wodurch die Eingriffsteile (44) mit einem Gegenstand in Eingriff gelangen und diesen halten.

## Revendications

1. Grappin pour robot industriel, comportant :
un cadre fixe (1) pouvant être relié à une portion formant poignée d'un bras (A) d'un robot industriel ; et
un cadre mobile (10) ayant en plan une forme rectangulaire, supporté par ledit cadre fixe de manière à pouvoir être déplacé librement dans une direction horizontal ; caractérise en ce que :
des tiges de guidage (30) sont fixées verticalement à chacun des quatre côtés dudit cadre mobile, un guide (33) s'étendant vers le bas suivant une forme convergente (34) étant fixé à la portion d'extrémité de chacune desdites tiges de guidage, des plaques de serrage (40) étant prévues sur deux côtés opposés dudit cadre mobile, chacune des plaques de serrage étant montée pivotante sur un axe horizontal (42) sensiblement à la partie centrale de la plaque de serrage, des éléments de mise on prise (44) pour tenir un objet, faisant saillie vers l'intérieur depuis les surfaces inférieures et intérieures des plaques de serrage, des galets (52) et des glissières pour galet (53) étant prévus respectivement sur le cadre fixe et sur le cadre mobile, pour limiter le mouvement du cadre dans la zone où celui-ci peut se déplacer suivant deux dimensions, un moyen, pour bloquer de façon sélective le cadre mobile dans un emplacement spécifique à l'intérieur de ladite zone, le cadre mobile comportant un mécanisme d'entraînement pour déplacer lesdites plaques de serrage et les mettre en prise avec un objet.

2. Grappin pour robot industriel suivant la revendication 1, dans lequel lesdites glissières (53) pour galet sont reliées de façon solidaire aux extrémités de bras (56) en forme de L respectivement, les autres extrémités desdits bras étant reliées à une tige (58) de piston d'une unité de vérin (54) à piston, chacun desdits bras en forme de L étant fixé de façon articulée à ladite plaque mobile (11) dudit cadre fixe (1) au moyen d'un ergot (57), une portion échancrée (55) trapézoïdale étant formée dans chacune desdites glissières (53) pour galet agencées dans leur ensemble de telle sorte qui lorsque ladite unité de vérin à piston est actionnée, la tige du piston fait saillie et les bras en forme de L sont entraînés en rotation autour desdites ergots, les glissières pour galet étant ainsi déplacées vers l'extérieur de telle sorte que les portions échancrées trapézoïdales se mettant en prise avec les galets et limitent le déplacement du cadre mobile, et lorsque l'unité de vérin à piston est rendue inopérante les glissières pour galet se désengagement des galets de manière à permettre le déplacement libre du cadre mobile.

3. Grappin pour robot industriel selon la revendication 1 ou 2, dans lequel ledit mécanisme d'entraînement comporte des unités de vérin à piston (45) dont les tiges de piston (46), lorsqu'elles font saillie vers l'extérieur, sont en prise avec des portions formant saillie (47) desdites plaques de serrage (40), de telle sorte que les parties supérieures des plaques sont amenées à pivoter vers l'extérieur, leurs parties inférieures étant ainsi amenées à pivoter vers l'intérieur autour desdites axes horizontaux (42), ce qui fait qui lesdites éléments de préhension (44) se mettent en prise avec un objet et le tiennent.
